# EUROPÄISCHE PATENTSCHRIFT

(11) **EP 2 779 744 B1**
(45) Veröffentlichungstag und Bekanntmachung des Hinweises auf die Patenterteilung: **11.10.2017**
(21) Anmeldenummer: 14158558.8
(22) Anmeldetag: 10.03.2014
(51) Int. Cl.: H04W 28/24, H04L 12/24, H04W 24/08

(54) **Verfahren zur Veränderung der einem Telekommunikationsendgerät zugeordneten Dienstqualität und System, umfassend ein Telekommunikationsendgerät und ein Telekommunikationsnetz, zur Veränderung der dem Telekommunikationsendgerät zugeordneten Dienstqualität**
Method for modifying the quality of service and system associated with a telecommunication terminal, comprising a telecommunications terminal and a telecommunication network, for modifying the telecommunication terminal associated with the quality of service
Procédé de modification de la qualité de service associée à un terminal et un système de télécommunication, comprenant un terminal de télécommunication et un réseau de télécommunication, pour la modification de la qualité de service associée au terminal de télécommunication

(30) Priorität: 15.03.2013 DE 102013004424
(43) Veröffentlichungstag der Anmeldung: 17.09.2014
(73) Patentinhaber: Deutsche Telekom AG, 53113 Bonn (DE)
(72) Erfinder: Blicker, Stephan, 53343 Wachtberg (DE)
(74) Vertreter: Schwöbel, Thilo K.

(56) Entgegenhaltungen:
- EP-A1- 2 360 958
- DE-A1-102006 015 857
- US-A1- 2005 094 560
- US-A1- 2006 002 377
- US-A1- 2006 203 722

## Beschreibung

### Stand der Technik

Die Erfindung betrifft ein Verfahren zur Veränderung der einem Telekommunikationsendgerät zugeordneten Dienstqualität für die Verwendung des Telekommunikationsendgeräts mit einem Telekommunikationsnetz.

Ferner betrifft die Erfindung ein System, umfassend ein Telekommunikationsendgerät und ein Telekommunikationsnetz, zur Veränderung der dem Telekommunikationsendgerät zugeordneten Dienstqualität für die Verwendung des Telekommunikationsendgeräts mit dem Telekommunikationsnetz.

Es ist allgemein bekannt, die Funktion und den Betrieb von Mobilfunk-Telekommunikationsnetzen zu optimieren, beispielsweise mittels Werkzeugen wie Service Performance Management (Dienstgüteverwaltung) oder Customer Experience Management (Kundenerfahrungsverwaltung). Hierbei werden Messungen bzw. Messzähler bzw. Zählerinformationen des Zugangsnetzes und/oder des Kernnetzes des Mobilfunk-Telekommunikationsnetzes dazu benutzt, Netzengpässe vorauszusehen und die Dienstqualität mittels definierter Leistungskennzahlen oder Leistungsindikatoren (sogenannte KPI-Werte bzw. im Englischen: Key Performance Indicators) zu messen bzw. zu überwachen.

Das Nutzerverhalten und die Nutzerzufriedenheit kann in heutigen mobilen Kernnetzen von Telekommunikationsnetzen bzw. Mobilfunk-Telekommunikationsnetzen über verschiedene Wege indirekt detektiert werden. So gibt es beispielsweise Systeme, die die Kundenerfahrung (bzw. im Englischen: Customer Experience) versuchen zu detektieren bzw. zu erfassen, sogenannte Kundenerfahrungsverwaltungssysteme (Customer Experience Management Systeme), die über eine passive Mess-und Analyse-Infrastruktur das Nutzerverhalten des Kunden über die Netzschnittstellen messen und auswerten können. Diese Systeme errechnen technische Leistungsindikatoren (bzw. KPI-Werte), die (indirekt) Rückschlüsse auf die Kundenzufriedenheit zulassen.

Das Dokument US 2005/0094560 A1 offenbart das Erfassen der Kundenzufriedenheit in einer Quality Control-Funktion im Funkzugangsnetzwerk. Sollte sich eine Verschlechterung des QoS für überwachte Datenverbindungen ergeben, so informiert die QC-Funktion eine Admission Control-Funktion, die darauf basierend den Netzzugang für neue Datenverbindungen steuert.

### Offenbarung der Erfindung

Der Erfindung liegt daher die Aufgabe zugrunde, ein Verfahren zur Veränderung der einem Telekommunikationsendgerät zugeordneten Dienstqualität für die Verwendung des Telekommunikationsendgeräts mit einem Telekommunikationsnetz anzugeben, mittels dem in möglichst direkter Weise, d.h. insbesondere relativ zeitnah, eine Information über die Kundenzufriedenheit, insbesondere die momentane Kundenzufriedenheit in der jeweiligen Benutzungssituation, möglich ist, und dessen Implementierung darüber hinaus in schneller, wenig komplexer und kostengünstiger Weise möglich ist.

Diese Aufgabe wird erfindungsgemäß gelöst durch ein Verfahren zur Veränderung der einem Telekommunikationsendgerät zugeordneten Dienstqualität für die Verwendung des Telekommunikationsendgeräts mit einem Telekommunikationsnetz, gemäß den Merkmalen des Anspruchs 1.

Gegenüber den bei herkömmlichen Mobilfunk-Telekommunikationsnetzen erfassten indirekten Parametern, die der Kundenzufriedenheit zugeordnet werden bzw. die als zur

Kundenzufriedenheit beitragend aufgefasst werden, gibt es in der Praxis weitere, insbesondere direkte, Anhaltspunkte für den Grad der Kundenzufriedenheit, die bei herkömmlichen Mobilfunk-Telekommunikationsnetzen nicht erfasst werden und sich aus nicht netzspezifischen technischen Leistungsindikatoren (KPIs) ergeben. Gemäß der vorliegenden Erfindung ist es vorteilhaft möglich, dass solche, bei herkömmlichen Mobilfunk-Telekommunikationsnetzen nicht erfasste, Anhaltspunkte für die Kundenzufriedenheit berücksichtigt werden und mit weiteren erfassten technischen Leistungsindikatoren verbunden werden, so dass zum einen eine Aussage zur Kundenzufriedenheit mit größerer zeitlicher Nähe sowie ein eine größere Aussagekraft aufweisendes Bild bezüglich der Kundenzufriedenheit technisch möglich ist und zum anderen auch eine Aussage zur Kundenzufriedenheit mit einer feiner granularen Struktur (insbesondere eine Aussage hinsichtlich der Kundenzufriedenheit von einzelnen Nutzern des Telekommunikationsnetzes bzw. von Telekommunikationsendgeräten innerhalb des Telekommunikationsnetzes) möglich ist.

Gemäß der vorliegenden Erfindung ist es vorgesehen, ein Kundenerfahrungssystem bereitzustellen, welches in der Lage ist, die Kundenzufriedenheit zu steigern und somit die Kundenbindung zu erhöhen. Das erfindungsgemäße Verfahren hat ferner den Vorteil, dass die Anzahl der Anrufe im Kundenservice bzw. bei der Kundendienststelle verringert wird, insbesondere deshalb, weil eine direktere bzw. zeitnähere Reaktion des Verhaltens des Telekommunikationsnetzes beim Kunden bzw. beim Benutzer des Telekommunikationsendgeräts im Telekommunikationsnetz erfahrbar ist. Ferner ist es erfindungsgemäß vorteilhaft vorgesehen, dass der Kunde über sein Nutzerverhalten so transparent wie möglich informiert wird, so dass in besonders einfacher und zielsicherer Weise beispielsweise auch möglich ist, sehr präzise und individuelle Tarifangebote dem Kunden zu übermitteln, die dem Nutzerverhalten so gut wie möglich entgegenkommen. Darüberhinaus ist es dem Netzbetreiber erfindungsgemäß in vorteilhafter Weise möglich, bessere Vorhersagen über die Kundenzufriedenheit und das Kundenverhalten zu treffen, insbesondere für den Fall, dass wichtige Parameter im Telekommunikationsnetz zu Gunsten des Kunden geändert werden.

Ein wesentlicher Bestandteil der Erfindung ist eine Kundenerfahrungsanwendungsfunktion, im Folgenden auch als "Customer Experience Application Function" bezeichnet bzw. mit CEAF abgekürzt. Diese Komponente sammelt die kundenspezifischen Daten aus verschiedenen Systemen und hat eine Geschäftslogik zur dynamischen Dienstqualitätskontrolle (Qos-(Quality of Service)-Kontrolle). Die Geschäftslogik ist erfindungsgemäß insbesondere netzbetreiberspezifisch und unabhängig vom Kundensegment. Gemäß einer alternativen Ausführungsform ist die Geschäftslogik jedoch nicht unabhängig vom Kundensegment, sondern im Gegenteil abhängig vom Kundensegment.

Erfindungsgemäß ist es gemäß einer ersten alternativen Variante der Erfindung vorgesehen, dass eine die Dienstqualität und/oder die Kundenzufriedenheit betreffende Kundenzufriedenheitsinformation vom Telekommunikationsendgerät zum Telekommunikationsnetz übertragen wird. Hierunter wird insbesondere eine direkte und auf den Grad der Kundenzufriedenheit bezogene Interaktion unter aktiver Einbindung des Kunden bzw. des das Telekommunikationsendgerät bedienenden Benutzers verstanden. Gemäß einer zweiten alternativen Variante der Erfindung ist es vorgesehen, dass eine die Dienstqualität und/oder die Kundenzufriedenheit betreffende Kundenzufriedenheitsinformation im Telekommunikationsnetz aufgrund einer Benutzung des Telekommunikationsendgeräts gemäß eines die Kundenzufriedenheit indizierenden Dienstnutzungsmusters während des ersten Verfahrensschritts generiert wird. Hierunter ist eine Interaktion des Kunden bzw. des das Telekommunikationsendgerät bedienenden Benutzers zu verstehen, die zwar nicht direkt auf den Grad der Kundenzufriedenheit bezogen ist, aus der jedoch zumindest in Form einer statistischen Aussage abgeleitet werden kann, wie der momentane Grad der Kundenzufriedenheit ist. Insbesondere in Situationen, in denen ein Hinweis auf einen vergleichsweise geringen Grad an Kundenzufriedenheit vorliegt, ist es erfindungsgemäß vorgesehen, dass vergleichsweise direkt, d.h. mit einer geringen zeitlichen Verzögerung (von beispielsweise weniger als 30 Sekunden oder weniger als 60 Sekunden oder weniger als 120 Sekunden oder weniger als 180 Sekunden oder weniger als 300 Sekunden oder weniger als 30 Minuten oder weniger als 60 Minuten) eine Veränderung, insbesondere eine Verbesserung, der vom Telekommunikationsnetz dem Telekommunikationsendgerät angebotenen bzw. zur Verfügung gestellten Dienstqualität vorgenommen wird. Dies entspricht der Durchführung des dritten Verfahrensschritts, d.h. die Anwendung der zweiten Dienstqualität, nachdem vom Telekommunikationsendgerät die zweite Dienstgüteinformation empfangen wurde. Erfindungsgemäß ist es bevorzugt vorgesehen, dass die Kundenzufriedenheitsinformation
-- durch das Telekommunikationsendgerät generiert wird oder
-- durch das Telekommunikationsnetz generiert wird,
wobei die Kundenzufriedenheitsinformation insbesondere in Abhängigkeit von detektierten Dienstqualitätsmesswerten berechnet wird, wobei die Dienstqualitätsmesswerte insbesondere durch Messung eines Signal-zu-Rausch-Verhältnisses und/oder einer Dienstgüte ermittelt werden.

Hierdurch ist es vorteilhaft möglich, die Nutzerzufriedenheit durch Bereitstellung einer besseren Dienstqualität zu steigern und außerdem die Ressourcen des Telekommunikationsnetzes in besonders effizienter Weise auszunutzen.

Erfindungsgemäß ist es bevorzugt vorgesehen, dass die zweite Dienstgüteinformation in Abhängigkeit der Kundenzufriedenheitsinformation bestimmt wird, wobei die zweite Dienstgüteinformation insbesondere vom Telekommunikationsnetz bestimmt wird.

Hierdurch ist es vorteilhaft möglich, den technischen Zusatzaufwand zu reduzieren, welcher erforderlich ist, um einen verbesserten Dienst (der insbesondere der höheren oder besseren Dienstqualität gleichwertig ist) bereitzustellen.

Erfindungsgemäß ist es somit besonders bevorzugt vorgesehen, dass die zweite Dienstqualität einer höheren oder besseren Dienstqualität entspricht als die erste Dienstqualität.

Es ist hierdurch erfindungsgemäß vorteilhaft möglich, mit einer geringen zeitlichen Verzögerung, nachdem ein geringer Grad an Kundenzufriedenheit festgestellt wurde, zum einen auf Kundenbedürfnisse zu reagieren und somit einen möglicherweise vorhandenen geringen Grad an Kundenzufriedenheit maßgeblich zu verbessern, und zum anderen auch direkt auf die Qualität von alternativen Netzdienstleistungsprodukten hinzuweisen, mit welchen gegebenenfalls eine (dauerhafte) Verbesserung der Dienstqualität möglich ist.

Erfindungsgemäß ist es ferner bevorzugt vorgesehen, dass die die Dienstqualität und/oder die Kundenzufriedenheit betreffende Kundenzufriedenheitsinformation auf eine zu geringe Dienstqualität und/oder eine zu geringe Kundenzufriedenheit hinweist.

Diese Situation kann mittels des erfindungsgemäßen Verfahrens erstmals in direkter, d.h. in zeitnaher, Weise detektiert werden, so dass in vorteilhafter Weise die Möglichkeit besteht, zu einer Verbesserung der Situation beizutragen, insbesondere durch eine netzseitigen Bereitstellung einer besseren Dienstqualität an den Kunden bzw. den das Telekommunikationsendgerät bedienenden Benutzer.

Besonders bevorzugt ist es gemäß der vorliegenden Erfindung ferner, dass die Kundenzufriedenheitsinformation gemäß wenigstens einer der nachfolgenden Alternativen übertragen wird:
-- mittels einer spezifisch zur Übertragung der Kundenzufriedenheitsinformation am Telekommunikationsendgerät vorhandenen Anwendung,
-- mittels Kontaktierung einer dem Telekommunikationsnetz zugeordneten Kundendienststelle durch eine am Telekommunikationsendgerät vorhandene weitere Anwendung zur Übertragung von Sprach- oder Datensignalen.

Hierdurch ist es erfindungsgemäß in vorteilhafter Weise gemäß insbesondere der ersten alternativen Variante der Erfindung vorgesehen, dass eine die Dienstqualität und/oder die Kundenzufriedenheit betreffende Kundenzufriedenheitsinformation vom Telekommunikationsendgerät zum Telekommunikationsnetz übertragen wird, nämlich mittels einer Anwendung (nachfolgend auch als Applikation bzw. "App" bezeichnet), die auf dem Telekommunikationsendgerät installiert ist. Hierdurch kann erfindungsgemäß insbesondere eine direkte und auf den Grad der Kundenzufriedenheit bezogene Interaktion unter aktiver Einbindung des Kunden bzw. des das Telekommunikationsendgerät bedienenden Benutzers zum Zwecke der Übermittlung der Kundenzufriedenheitsinformation erfolgen. Bei der spezifisch zur Übertragung der Kundenzufriedenheitsinformation am Telekommunikationsendgerät vorhandenen Anwendung kann es sich beispielsweise um eine Kundenrückmeldeanwendung (Customer Feedback application) handeln. Bei der am Telekommunikationsendgerät vorhandenen weiteren Anwendung zur Übertragung von Sprach- oder Datensignalen kann es sich beispielsweise um eine Telefonieanwendung oder eine Internetanwendung bzw. um einen Browser handeln, wobei jedoch eine dem Telekommunikationsnetz zugeordnete Kundendienststelle explizit vom Benutzer kontaktiert wird.

Erfindungsgemäß ist ferner auch bevorzugt, dass zusätzlich zu der Kundenzufriedenheitsinformation eine oder eine Mehrzahl der folgenden Informationen übertragen wird:
-- wenigstens eine Standortinformation des Telekommunikationsendgeräts;
-- eine Zeitangabe, auf die sich die Kundenzufriedenheitsinformation bezieht;
-- wenigstens ein technischer Leistungsindikator (KPI-Wert, Key Performance Indicator);
-- eine anwendungsbezogene Rückmeldung.

Hierdurch ist es in vorteilhafter Weise realisierbar, dass zusätzliche Informationen übertragen werden, die beispielsweise einen Hinweis geben können, weshalb die Dienstqualität, zumindest die beim Benutzer des Telekommunikationsendgerät ankommende bzw. erlebte Dienstqualität, einen vergleichsweise schlechten Wert aufweist, beispielsweise weil der Standort des Telekommunikationsendgerät nicht besonders optimal gewählt ist oder dergleichen.

Ferner ist es erfindungsgemäß bevorzugt vorgesehen, dass das die

Kundenzufriedenheitsinformation indizierende Dienstnutzungsmuster einem Dienstnutzungsmuster gemäß wenigstens einer der nachfolgenden Situationen entspricht:
-- am Telekommunikationsendgerät wird wiederholt ein identischer Seitenaufbau oder eine identische Datenübertragung angefordert;
-- am Telekommunikationsendgerät wird eine Anwendung abgebrochen, bevor eine Nutzsituation der Anwendung eintritt;
-- am Telekommunikationsendgerät wird eine Anwendung installiert und innerhalb eines vorgegebenen zeitlichen Löschintervalls nach der Installation der Anwendung oder nach einer Benutzung der Anwendung wieder gelöscht.

Hierdurch ist es erfindungsgemäß besonders einfach und vor allem zeitnah möglich, dass ohne eine explizite Bezugnahme des Benutzers auf einen (insbesondere besonders niedrigen) Grad an Kundenzufriedenheit, allein dem zuvor (d.h. während des ersten Verfahrensschritts) erfolgten Dienstnutzungsmuster des Benutzers ein Hinweis entnommen wird, dass ein gewisser (insbesondere geringer) Grad an Kundenzufriedenheit vorliegt; auch wenn diese Aussage strenggenommen lediglich eine statistische Aussagekraft aufweist dahingehend, dass in der Regel (und damit nicht kausal zwingend in jedem Einzelfall) mit einem solchen Dienstnutzungsmuster ein (geringer) Grad an Kundenzufriedenheit verbunden ist.

Erfindungsgemäß ist es weiterhin auch bevorzugt vorgesehen, dass in einem vierten Verfahrensschritt zeitlich nach dem dritten Verfahrensschritt vom Telekommunikationsendgerät eine vom Telekommunikationsnetz gesendete und einer dritten Dienstqualität entsprechende dritte Dienstgüteinformation empfangen wird, wobei die dritte Dienstqualität einer gegenüber der zweiten Dienstqualität geänderten Dienstqualität entspricht, wobei insbesondere die dritte Dienstqualität der ersten Dienstqualität entspricht.

Hierdurch ist es erfindungsgemäß in einfacher Weise möglich, dass der Zeitraum der insbesondere verbesserten zweiten Dienstqualität auf solche Situationen begrenzt werden kann, in denen die Wahrscheinlichkeit, dass eine typischerweise verminderte Kundenzufriedenheit vorliegt, vergleichsweise groß ist. Ferner ist es erfindungsgemäß - insbesondere zusätzlich zu einer zeitlichen Begrenzung der Anwendung der zweiten Dienstqualität - auch vorgesehen, dass die Anwendung der zweiten Dienstqualität für ein und denselben Benutzer bzw. Kunden nicht beliebig häufig erfolgt, d.h. die Anzahl der Fälle, in denen die zweite Dienstqualität für ein und denselben Benutzer bzw. Kunden angewendet wird, ist (entweder absolut (etwa 10 mal) oder auch innerhalb eines bestimmten Zeitintervalls von beispielsweise eines Tages oder einer Woche oder eines Monats) begrenzt, beispielsweise ist die Anzahl der Fälle der Anwendung der zweiten Dienstqualität auf zwei oder auf drei oder auf vier oder auf fünf oder auf zehn begrenzt.

Erfindungsgemäß ist es weiterhin bevorzugt, dass der Zeitraum der Anwendung der zweiten Dienstqualität einem vorgegebenen Zeitintervall entspricht.
Beispielsweise entspricht das vorgegebene Zeitintervall der Anwendung der zweiten Dienstqualität ca. 60 Sekunden oder ca. 120 Sekunden oder ca. 180 Sekunden oder ca. 300 Sekunden oder ca. 30 Minuten oder ca. 60 Minuten oder ca. 120 Minuten oder ca. 180 Minuten.
Ferner ist es erfindungsgemäß auch bevorzugt vorgesehen, dass die Änderung von der ersten Dienstqualität zur zweiten Dienstqualität im dritten Verfahrensschritt und/oder die Änderung von der zweiten Dienstqualität zur dritten Dienstqualität im vierten Verfahrensschritt am Telekommunikationsendgerät signalisiert wird, insbesondere derart signalisiert wird, dass ein Benutzer des Telekommunikationsendgeräts von der Signalisierung Kenntnis erlangt oder zumindest Kenntnis erlangen kann. Beispielsweise erfolgt die Signalisierung optisch oder akustisch (bzw. mittels einer Vibration) oder auch sowohl optisch als auch akustisch (bzw. sowohl optisch als auch mittels einer Vibration). Hierdurch ist es erfindungsgemäß vorteilhaft möglich, ein hohes Maß an Transparenz bei der Benutzung des Telekommunikationsnetzes durch den Benutzer des Telekommunikationsendgeräts zu schaffen.
Beim erfindungsgemäßen Verfahren ist es weiterhin bevorzugt vorgesehen, dass in einem fünften Verfahrensschritt zeitlich nach dem zweiten Verfahrensschritt und zeitlich vor dem dritten Verfahrensschritt ein Kundenzufriedenheitsindex in Abhängigkeit einer Mehrzahl von Kundenzufriedenheitsinformationen generiert wird, wobei der dritte Verfahrensschritt in Abhängigkeit des Kundenzufriedenheitsindices durchgeführt wird.
Hierdurch ist es erfindungsgemäß in besonders vorteilhafter Weise möglich, dass mehrere Informationskanäle bzw. Informationsquellen herangezogen bzw. ausgewertet werden, um in Abhängigkeit einer Mehrzahl von Kundenzufriedenheitsinformationen zu entscheiden, ob eine Änderung der Dienstqualität (d.h. die Verwendung der zweiten Dienstqualität anstelle der ersten Dienstqualität) vorgenommen wird oder nicht.
Ein weiterer Gegenstand der vorliegenden Erfindung ist ein System, umfassend ein Telekommunikationsendgerät und ein Telekommunikationsnetz, zur Veränderung der dem Telekommunikationsendgerät zugeordneten Dienstqualität für die Verwendung des Telekommunikationsendgeräts mit dem Telekommunikationsnetz, gemäß den Merkmalen des Anspruchs 13.

Mit einem solchen erfindungsgemäßen System (bzw. einem Telekommunikationsnetz mit Telekommunikationsendgerät) ist es gegenüber herkömmlichen Mobilfunk-Telekommunikationsnetzen vorteilhaft möglich, solche Parameter, die der Kundenzufriedenheit zugeordnet werden bzw. die als zur Kundenzufriedenheit beitragend aufgefasst werden, in einfacher Weise und sehr zeitnah zu erfassen, so dass eine Aussage zur Kundenzufriedenheit mit größerer zeitlicher Nähe sowie ein eine größere Aussagekraft aufweisendes Bild bezüglich der Kundenzufriedenheit technisch möglich ist und zum anderen auch eine Aussage zur Kundenzufriedenheit mit einer feiner granularen Struktur möglich ist. Sämtliche bevorzugten Ausbildungen bzw. Ausführungsformen der Erfindung, die im Zusammenhang mit dem erfindungsgemäßen Verfahren oben offenbart wurden, sind sinngemäß auch mit dem erfindungsgemäßen System bevorzugt vorgesehen, insbesondere
-- dass die zweite Dienstqualität einer höheren oder besseren Dienstqualität entspricht als die erste Dienstqualität,
-- dass die die Dienstqualität und/oder die Kundenzufriedenheit betreffende Kundenzufriedenheitsinformation auf eine zu geringe Dienstqualität und/oder eine zu geringe Kundenzufriedenheit hinweist,
-- dass die Kundenzufriedenheitsinformation mittels einer spezifisch zur Übertragung der Kundenzufriedenheitsinformation am Telekommunikationsendgerät vorhandenen Anwendung und/oder mittels Kontaktierung einer dem Telekommunikationsnetz zugeordneten Kundendienststelle durch eine am Telekommunikationsendgerät vorhandene weitere Anwendung zur Übertragung von Sprach- oder Datensignalen übertragen wird,
-- dass zusätzlich zu der Kundenzufriedenheitsinformation zusätzliche Informationen, insbesondere wenigstens eine Standortinformation des Telekommunikationsendgeräts und/oder eine Zeitangabe, auf die sich die Kundenzufriedenheitsinformation bezieht und/oder wenigstens ein technischer Leistungsindikator (KPI-Wert, Key Performance Indicator) und/oder eine anwendungsbezogene Rückmeldung, übertragen werden,
-- dass das die Kundenzufriedenheitsinformation indizierende Dienstnutzungsmuster einem Dienstnutzungsmuster gemäß verschiedener Situationen entspricht,
-- dass nach einem vorgegebenen Zeitintervall von der zweiten Dienstqualität wieder zu einer dritten Dienstqualität, bzw. insbesondere zur ersten Dienstqualität, gewechselt wird. Ferner bezieht sich die vorliegende Erfindung auch auf ein Computerprogramm mit Programmcodemitteln, gemäß den Merkmalen des Anspruchs 14.

Weiterhin ist Gegenstand der vorliegenden Erfindung ein Computerprogrammprodukt mit einem computerlesbaren Medium und einem auf dem computerlesbaren Medium gespeicherten Computerprogramm gemäß den Merkmalen des Anspruchs 15.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines Telekommunikationsnetzes mit einem Telekommunikationsendgerät.
- **Figur 2**: zeigt schematisch ein Kommunikationsdiagramm zur Durchführung des erfindungsgemäßen Verfahrens.
- **Figur 3**: zeigt schematisch eine Kundenerfahrungsanwendungsfunktion (Customer Experience Application Function) gemäß der vorliegenden Erfindung mit einem Telekommunikationsendgerät.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

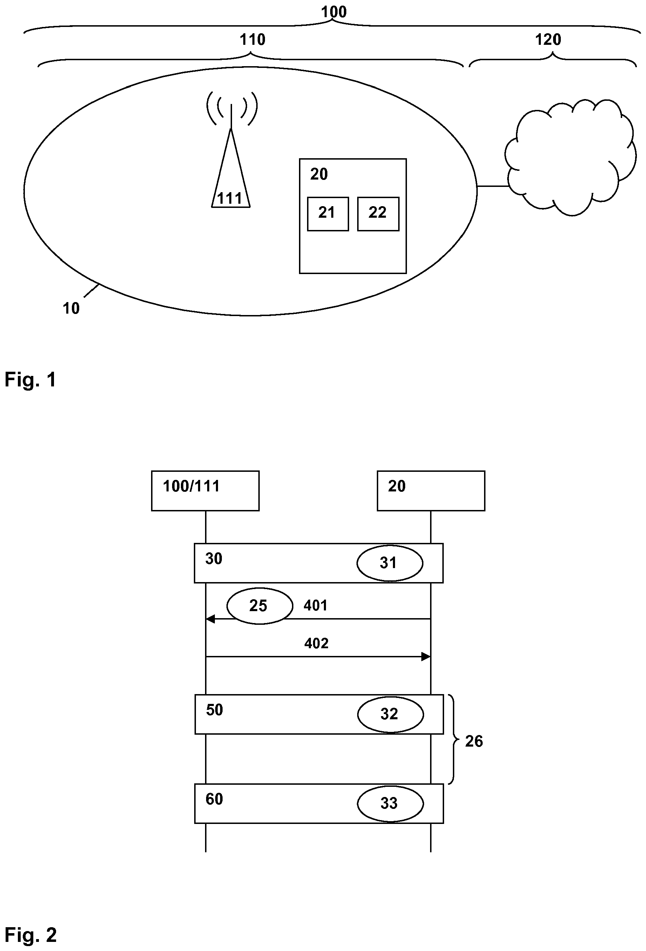

In Figur 1 ist eine schematische Ansicht eines Telekommunikationsnetzes 100 dargestellt. Das Telekommunikationsnetz 100 weist ein Zugangsnetz 110 und ein Kernnetz 120 auf. Das Telekommunikationsnetz 100 ist als zelluläres Telekommunikationsnetz 100 ausgebildet, d.h. eine Basisstation 111 bzw. eine Basisstationseinheit 111, typischerweise jedoch eine Mehrzahl von Basisstationen 111 bzw. Basisstationseinheiten 111, ist bzw. sind Teil des Zugangsnetzes 110 und damit auch Teil des Telekommunikationsnetzes 100. Eine solche Basisstation 111 bzw. eine solche Basisstationseinheit 111 deckt typischerweise ein geographisches Gebiet 10, welches auch als Zelle 10 oder Funkzelle 10 innerhalb des zellulären Telekommunikationsnetzes 100 bezeichnet wird.

Ein Telekommunikationsendgerät 20 ist innerhalb der Funkzelle 10 mittels einer Funkverbindung mit der Basisstation 111 bzw. der Basisstationseinheit 111 und damit auch mit dem Telekommunikationsnetz 100 verbunden. Typischerweise sind eine Mehrzahl von verschiedenen Telekommunikationsendgeräten innerhalb einer Funkzelle 10 vorhanden und zumindest teilweise auch mit der Basisstation 111 über eine jeweilige Funkverbindung verbunden, wobei jedoch lediglich das Telekommunikationsendgerät 20 in Figur 1 dargestellt ist. Das Telekommunikationsendgerät 20 weist in der Regel wenigstens eine Anwendung 21 und/oder eine weitere Anwendung 22 auf bzw. die Anwendung 21 und/oder die weitere Anwendung 22 sind am bzw. "auf" dem Telekommunikationsendgerät 20 vorhanden, in der Regel in Form von Anwendungen, die (als Programmmodule bzw. Programme, häufig in Form sogenannter Applikationen bzw "Apps") auf dem Telekommunikationsendgerät 20 installiert sind.

In Figur 2 ist in schematischer Darstellung ein Kommunikationsdiagramm zwischen einerseits dem Telekommunikationsnetz 100 (bzw. der Basisstation 111) und andererseits dem Telekommunikationsendgerät 20 zur Durchführung des erfindungsgemäßen Verfahrens dargestellt. Gemäß dem erfindungsgemäßen Verfahren bzw. dem erfindungsgemäßen System umfassend das Telekommunikationsendgerät 20 und das Telekommunikationsnetz 100 ist es vorgesehen, dass die dem Telekommunikationsgerät 20 zugeordnete Dienstqualität verändert wird. Dies bedeutet, dass während oder vor einer in Figur 2 mit dem Bezugszeichen 30 bezeichneten Zeitspanne eine erste Dienstgüteinformation 31 zwischen dem Telekommunikationsnetz 100 und dem Telekommunikationsendgerät 20 ausgetauscht wird und eine Kommunikation zur Nutzung von durch das Telekommunikationsnetz 100 bereitgestellten Kommunikationsdiensten mit dem Telekommunikationsendgerät 20 erfolgt, wobei bei dieser Kommunikation eine (mit der ersten Dienstgüteinformation 31 korrespondierende) erste Dienstqualität verwendet bzw. angewendet wird.

Gemäß einer ersten, in Figur 2 dargestellten Ausführungsvariante des erfindungsgemäßen Verfahrens ist es vorgesehen, dass eine die Dienstqualität und/oder die Kundenzufriedenheit betreffende Kundenzufriedenheitsinformation 25 mittels einer ersten Nachricht 401 vom Telekommunikationsendgerät 20 zum Telekommunikationsnetz 100 (bzw. zur Basisstation 111) übertragen wird. Mittels einer zweiten Nachricht 402 vom Telekommunikationsnetz 100 (bzw. von der Basisstation 111) zum Telekommunikationsendgerät 20 wird eine Änderung der anzuwendenden Dienstqualität vorgenommen. Dies bedeutet, dass nicht mehr die (der ersten Dienstgüteinformation 31 entsprechende) erste Dienstqualität, sondern eine zweite (einer zweiten Dienstgüteinformation 32 entsprechende) Dienstqualität während einer mit dem Bezugszeichen 50 bezeichneten weiteren Zeitspanne anzuwenden ist bzw. vom Telekommunikationsnetz 100 (bzw. der Basisstation 111) bereitgestellt wird. Die Veränderung der Dienstqualität erfolgt in Abhängigkeit von der Kundenzufriedenheitsinformation 25 und in Abhängigkeit von weiteren Parametern, beispielsweise in Abhängigkeit des Kunden bzw. Vertragspartner des jeweiligen Telekommunikationsendgeräts 20.

Gemäß einer zweiten , in Figur 2 nicht explizit dargestellten Ausführungsvariante des erfindungsgemäßen Verfahrens ist es vorgesehen, dass eine die Dienstqualität und/oder die Kundenzufriedenheit betreffende Kundenzufriedenheitsinformation 25 im Telekommunikationsnetz 100 (bzw. in der Basisstation 111) aufgrund einer Benutzung des Telekommunikationsendgeräts 20 gemäß eines die Kundenzufriedenheit indizierenden Dienstnutzungsmusters während des ersten Verfahrensschritts (d.h. während der in Figur 2 mit dem Bezugszeichen 30 bezeichneten Zeitspanne) generiert wird. Wiederum ist auch gemäß der zweiten Ausführungsvariante des Verfahrens vorgesehen, dass mittels der zweiten Nachricht 402 vom Telekommunikationsnetz 100 (bzw. von der Basisstation 111) zum Telekommunikationsendgerät 20 wird eine Änderung der anzuwendenden Dienstqualität vorgenommen wird. Dies bedeutet, dass nicht mehr die (der ersten Dienstgüteinformation 31 entsprechende) erste Dienstqualität, sondern die zweite (der zweiten Dienstgüteinformation 32 entsprechende) Dienstqualität während der mit dem Bezugszeichen 50 bezeichneten weiteren Zeitspanne anzuwenden ist bzw. vom Telekommunikationsnetz 100 (bzw. der Basisstation 111) bereitgestellt wird. Die Veränderung der Dienstqualität erfolgt wiederum in Abhängigkeit der Kundenzufriedenheitsinformation 25 (und in Abhängigkeit von weiteren Parametern), wobei jedoch die Kundenzufriedenheitsinformation 25 gemäß der zweiten Ausführungsvariante nicht notwendigerweise durch das Telekommunikationsendgerät 20 übertragen wird, sondern aufgrund des Dienstnutzungsmusters des Telekommunikationsendgerät 20 im Telekommunikationsnetz 100 generiert wird.

Die erste und zweite Ausführungsvariante kann gemäß einer besonders bevorzugten Ausführungsform erfindungsgemäß auch miteinander kombiniert werden, d.h. es ist möglich, dass im Telekommunikationsendgerät 20, insbesondere über die Anwendung 21 und/oder die zweite Anwendung, die Kundenzufriedenheitsinformation 25 (bzw. eine Kundenzufriedenheitsinformation 25 erster Art) generiert wird und aufgrund des Dienstnutzungsmusters des Telekommunikationsendgeräts 20 ferner die Kundenzufriedenheitsinformation 25 (bzw. eine Kundenzufriedenheitsinformation 25 zweiter Art) vom Telekommunikationsnetz 100 generiert wird. Aufgrund sowohl der Kundenzufriedenheitsinformation 25 erster Art als auch der Kundenzufriedenheitsinformation 25 zweiter Art wird dann die Veränderung der Dienstqualität (d.h. die Anwendung der zweiten Dienstqualität) vorgenommen, insbesondere unter Berücksichtigung von sowohl der Kundenzufriedenheitsinformation 25 erster Art und der Kundenzufriedenheitsinformation 25 zweiter Art.

In einer nachfolgenden weiteren mit dem Bezugszeichen 60 bezeichneten Zeitspanne wird erfindungsgemäß in der Regel dann die Dienstqualität wieder geändert, nämlich zu einer (einer dritten Dienstgüteinformation 33 entsprechenden) dritten Dienstqualität, wobei die dritte Dienstqualität insbesondere der ersten Dienstqualität entspricht. Erfindungsgemäß ist es insbesondere vorgesehen, dass die Anwendbarkeit bzw. die Anwendung der zweiten Dienstqualität während eines vorgegebenen Zeitintervalls 26 erfolgt.

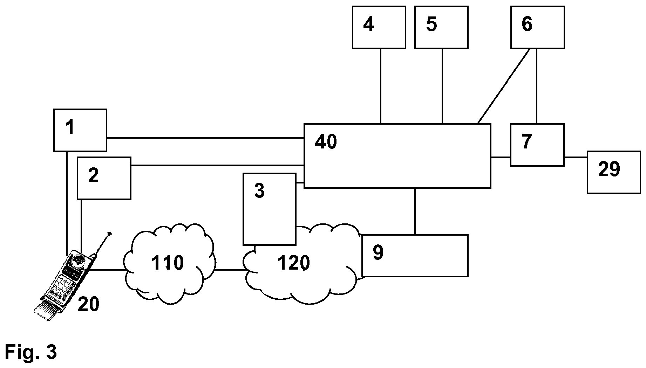

In Figur 3 ist schematisch eine Kundenerfahrungsanwendungsfunktion 40 (Customer Experience Application Function) gemäß der vorliegenden Erfindung, d.h. insbesondere zur Durchführung des erfindungsgemäßen Verfahrens mit dem Telekommunikationsendgerät 20 dargestellt. Das Telekommunikationsnetz 100 ist mit seinen Teilen Zugangsnetz 110 und Kernnetz 120 ebenfalls in Figur 3 dargestellt.

Erfindungsgemäß weist die Kundenerfahrungsanwendungsfunktion 40 eine erste Schnittstelle 1 zur Kommunikation mit dem Telekommunikationsendgerät 20 auf, insbesondere zur direkten Kommunikation, etwa über Kurznachrichten (SMS, short message service) oder Multimedianachrichten (MMS, multimedia message service). Diese erste Schnittstelle 1 ermöglichst es der Kundenerfahrungsanwendungsfunktion 40 kundenspezifische Informationen über die Netzqualität sowie die (insbesondere während des zweiten bzw. dritten Verfahrensschritts) eingeleiteten Maßnahmen zur Verbesserung der kundenspezifischen Netzqualität an den Kunden zu versenden, sofern ein solcher Versand gewünscht bzw. eingerichtet ist.

Die Kundenerfahrungsanwendungsfunktion 40 weist in der gemäß Figur 3 dargestellten beispielhaften Ausführungsform ferner eine zweite Schnittstelle 2 zur Kommunikation mit dem Telekommunikationsendgerät 20 auf. Hierbei handelt es sich bei der zweiten Schnittstelle beispielsweise um eine spezifisch zur Übertragung der Kundenzufriedenheitsinformation 25 am Telekommunikationsendgerät 20 vorhandene Anwendung 21. Eine solche Anwendung 21 erlaubt es, am Telekommunikationsendgerät 20 direkt eine Rückmeldung (bzw. Feedback) bezüglich des Grades der Kundenzufriedenheit an das Telekommunikationsnetz 100 zu senden, insbesondere hinsichtlich der Zufriedenheit der Paketdatenverbindungen oder bezüglich (gegenüber der Anwendung 21 anderer) Applikationen (bzw. Anwendungen). Die Anwendung 21 überträgt bevorzugt, insbesondere dienstbezogen, neben der bloßen Übertragung der Kundenzufriedenheitsinformation 25 hinaus auch noch Standortdaten, Zeitstempel, technische KPI-Werte (beispielsweise den Datendurchsatz), und/oder eine anwendungsspezifische Rückmeldung, d.h. wenigstens eine Standortinformation des Telekommunikationsendgeräts 20 und/oder wenigstens eine Zeitangabe, auf die sich die Kundenzufriedenheitsinformation 25 bezieht, und/oder wenigstens einen technischen Leistungsindikator (KPI-Wert, Key Performance Indicator).

Die Kundenerfahrungsanwendungsfunktion 40 weist in der gemäß Figur 3 dargestellten beispielhaften Ausführungsform ferner eine dritte Schnittstelle 3 auf, welche mit dem Kernnetz 120 des Telekommunikationsnetz 100 kommuniziert bzw. mit diesem verbunden ist. Die dritte Schnittstelle 3 entspricht einer Kundenerfahrungsverwaltung (bzw. einer Customer Experience Management Einheit) bzw. einem Kundenerfahrungsverwaltungsystem. Hierbei werden - insbesondere mittels technischer Leistungsindikatoren bzw. KPI-Werte - Datendurchsatzwerte, Webseitenaufbauwerte, videospezifische Werte (insbesondere Wartezeiten, die Anzahl von Stopps der Übertragung (bzw. gar der Unterbrechung) während einer Videobetrachtung sowie weitere kundenzentrierte bzw. kundenspezifische technische Leistungsindikatoren erfasst und der Kundenerfahrungsanwendungsfunktion 40 über die dritte Schnittstelle 3 zur Verfügung gestellt.

Die Kundenerfahrungsanwendungsfunktion 40 weist in der gemäß Figur 3 dargestellten beispielhaften Ausführungsform ferner eine vierte Schnittstelle 4 auf, wobei über die vierte Schnittstelle 4 Kundendienstdaten (bzw. Customer Service Data) verfügbar sind. Über die vierte Schnittstelle 4 werden der Kundenerfahrungsanwendungsfunktion 40 kundenspezifische Informationen über Beschwerden bezüglich verschiedener Paketdatendienste zur Verfügung gestellt. Diese Daten bzw. Kundendienstdaten sind solche Daten, die über die dem Telekommunikationsnetz 100 zugeordnete Kundendienststelle erfasst werden, d.h. die aus den Daten des (technischen) Kundendienstes bereitgestellt werden. Diese Daten können insbesondere Informationen umfassen über den Grad der Unzufriedenheit des Kunden mit dem jeweiligen Dienst und/oder über die Ursachen für die Unzufriedenheit und/oder Lösungsmöglichkeiten zur Steigerung der Zufriedenheit.

Die Kundenerfahrungsanwendungsfunktion 40 weist in der gemäß Figur 3 dargestellten beispielhaften Ausführungsform ferner eine fünfte Schnittstelle 5 auf, wobei über die fünfte Schnittstelle 5 Besonderheiten bezüglich des Kundenverhaltens am Telekommunikationsendgerät 20 geliefert werden, ohne dass diese über ein Messsystem ermittelt werden können, jedoch Rückschlüsse auf ein fehlerhaftes Telekommunikationsnetz 100 zulassen bzw. Rückschlüsse auf Lücken bzw. Gebiete geringerer Netzabdeckung zulassen. Hierbei werden insbesondere die Folgenden Situationen bzw. Ereignisse analysiert und detektiert:
-- Das Verhalten des Kunden (z.B. ob der Kunde am Telekommunikationsendgerät 20 mehrfach eine Wiederholungstaste drückt, weil beispielsweise mit ein Webseitenaufbau ungenügend (schnell) erfolgt);
-- Der Abbruch von Anwendungen bzw. Applikationen durch einen Kunden am Telekommunikationsendgerät 20 in vorschneller Art, d.h. insbesondere bevor ein nutzbringende Information vorliegt oder die Anwendung eine solche Information geliefert hat (weil die Anwendung möglicherweise nicht richtig funktioniert);
-- Das Laden einer (neuen) Anwendung (bzw. einer Aktualisierung (update) einer Anwendung) aus einem Anwendungsladen (App Store), das Starten der geladenen Anwendung und das sofortige Löschen der Anwendung (weil der Kunde beispielsweise von der Anwendung enttäuscht ist);
-- Der Anruf bei einer Kundendienststelle nach dem Gebrauch der Anwendung (womöglich weil der Kunde mit der Qualität des Telekommunikationsnetzes 100 nicht zufrieden ist). Über die fünfte Schnittstelle 5 werden Zufriedenheitskennzahlen auf der Basis von Analysen sehr großer, teilweise unstrukturierter oder semistrukturierter Datenmengen der Kundenerfahrungsanwendungsfunktion 40 zur Verfügung gestellt, die insbesondere aus verschiedenen Datenquellen des Telekommunikationsnetzes 100 entnommen werden.

Die Kundenerfahrungsanwendungsfunktion 40 weist in der gemäß Figur 3 dargestellten beispielhaften Ausführungsform ferner eine sechste Schnittstelle 6 auf, wobei über die sechste Schnittstelle 6 kundenspezifische Statistiken im Detail zu einer bereits bestehenden persönlichen Datenverwaltungsystem (personal data management system, PDM), so dass ein Kunde (d.h. der Benutzer des Telekommunikationsendgeräts 20) Zugriff auf alle oder zumindest einen Teil der Detaildaten hat. Dies erhöht die Transparenz, so dass es insbesondere möglich ist, das Nutzerverhalten im Rückblick zu betrachten und zu analysieren. Hierdurch gewinnt der Nutzer ein Höchstmaß an Transparenz über das eigene Nutzerverhalten; er kann möglicherweise auf den Nutzerverhalten zugeschnittene Tarifoptionen erhalten und solche Tarifoptionen können über das persönliche Datenverwaltungsssystem bzw. ein entsprechendes Portal über ein Tarifsystem zur Verfügung gestellt werden.

Die Kundenerfahrungsanwendungsfunktion 40 weist in der gemäß Figur 3 dargestellten beispielhaften Ausführungsform ferner eine siebente Schnittstelle 7 auf, wobei über die siebente Schnittstelle 7 ein Marketingsystem Daten aus dem persönlichen Datenverwaltungssystem zu entnehmen bzw. zu nutzen in der Lage ist, wobei solche Daten insbesondere zeitnah für erweiterte Tarifoptionen gegenüber dem bisher benutzten Tarif (sogenannte upsell-Möglichkeit, d.h. die Möglichkeit einen Tarif mit einem besseren Funktionsumfang anzuwenden, etwa ein Datentarif mit einem größeren Inklusiv-Volumen und/oder ein Partnerdienst, etwa ein Musikvertrieb, und/oder ein Datentarif mit einer verbesserten Dienstqualität) verwendet werden. Das Marketingsystem kann hierbei über eine Schnittstelle zum persönlichen Datenverwaltungssystem (d.h. zur sechsten Schnittstelle 6) Informationen zum Kunden übertragen, etwa Informationen über erweiterte Tarifoptionen gegenüber dem bisher benutzten Tarif (upsell-Möglichkeiten) oder aber einen Hinweis auf ein Buchungsportal übermitteln. Alternativ können auch Informationen über erweiterte Tarifoptionen gegenüber dem bisher benutzten Tarif (upsell-Möglichkeiten) über die erste Schnittstelle 1 dem Nutzer bzw. an das Telekommunikationsendgerät 20 kommuniziert werden.

Aus allen empfangenen Daten, insbesondere der zweiten Schnittstelle 2 und/oder der dritten Schnittstelle 3 und/oder der vierten Schnittstelle 4 und/oder der fünften Schnittstelle 5 wird in der Kundenerfahrungsanwendungsfunktion 40 insbesondere ein Zufriedenheitsindex berechnet, der insbesondere auf einem netzbetreiberspezifischen Algorithmus beruht. Unterschreitet dieser Zufriedenheitsindex einen bestimmten Wert, etwa einen Grenzwert, so veranlasst die Kundenerfahrungsanwendungsfunktion 40 eine Änderung der Dienstqualität, was dem Übergang von der ersten Dienstqualität zur zweiten Dienstqualität gemäß der vorliegenden Erfindung entspricht, d.h. die Reaktion im dritten Verfahrensschritt auf die (entweder vom Telekommunikationsendgerät 20 übertragene oder vom Telekommunikationsnetz 100 generierte) Kundenzufriedenheitsinformation 25. Diese Änderung ist erfindungsgemäß insbesondere zeitlich begrenzt bzw. befristet; dies ist jedoch nicht zwingend der Fall. Die Änderung wird dem Kunden bzw. dem Nutzer des Telekommunikationsendgeräts 20 - insbesondere über einen Hinweis am Telekommunikationsendgerät 20 oder aber über einen Hinweis im persönlichen Datenverwaltungssystem - mitgeteilt. Alternativ wird die Änderung dem Kunden bzw. dem Nutzer des Telekommunikationsendgeräts 20 nicht mitgeteilt bzw. lediglich für einen Teil solcher Änderungen mitgeteilt.

Insbesondere ist es erfindungsgemäß vorteilhaft möglich, dass die Daten der Schnittstellen, insbesondere der zweiten Schnittstelle 2 und/oder der dritten Schnittstelle 3 und/oder der vierten Schnittstelle 4 und/oder der fünften Schnittstelle 5, nahezu in Echtzeit zur Verfügung gestellt und ausgewertet werden als auch lediglich tagesaktuell.

## Patentansprüche

1. Verfahren zur Veränderung der einem Telekommunikationsendgerät (20) zugeordneten Dienstqualität für die Verwendung des Telekommunikationsendgeräts (20) mit einem Telekommunikationsnetz (100), wobei das Verfahren die folgenden Verfahrensschritte aufweist:
-- in einem ersten Verfahrensschritt während der Verwendung des Telekommunikationsendgeräts (20) mit dem Telekommunikationsnetz (100) wird vom Telekommunikationsendgerät (20) eine vom Telekommunikationsnetz (100) gesendete und einer ersten Dienstqualität entsprechende erste Dienstgüteinformation (31) empfangen und die erste Dienstqualität angewendet,
-- in einem zweiten Verfahrensschritt zeitlich nach dem ersten Verfahrensschritt wird
-- eine die Dienstqualität und/oder die Kundenzufriedenheit betreffende Kundenzufriedenheitsinformation (25) vom Telekommunikationsendgerät (20) zum Telekommunikationsnetz (100) übertragen oder
-- eine die Dienstqualität und/oder die Kundenzufriedenheit betreffende Kundenzufriedenheitsinformation (25) im Telekommunikationsnetz (100) aufgrund einer Benutzung des Telekommunikationsendgeräts (20) gemäß eines die Kundenzufriedenheit indizierenden Dienstnutzungsmusters während des ersten Verfahrensschritts generiert,
-- in einem dritten Verfahrensschritt zeitlich nach dem zweiten Verfahrensschritt wird vom Telekommunikationsendgerät (20) eine vom Telekommunikationsnetz (100) gesendete und einer zweiten Dienstqualität entsprechende zweite Dienstgüteinformation (32) empfangen und die zweite Dienstqualität angewendet, wobei die zweite Dienstqualität einer gegenüber der ersten Dienstqualität geänderten Dienstqualität entspricht, wobei die Veränderung der Dienstqualität in Abhängigkeit von der Kundenzufriedenheitsinformation erfolgt.

2. Verfahren nach Anspruch 1, **dadurch gekennzeichnet, dass** die Kundenzufriedenheitsinformation (25)
-- durch das Telekommunikationsendgerät (20) generiert wird oder
-- durch das Telekommunikationsnetz (100) generiert wird,
wobei die Kundenzufriedenheitsinformation (25) insbesondere in Abhängigkeit von detektierten Dienstqualitätsmesswerten berechnet wird, wobei die Dienstqualitätsmesswerte insbesondere durch Messung eines Signal-zu-Rausch-Verhältnisses und/oder einer Dienstgüte ermittelt werden.

3. Verfahren nach einem der vorhergehenden Ansprüche, **dadurch gekennzeichnet, dass** die zweite Dienstgüteinformation (32) in Abhängigkeit der Kundenzufriedenheitsinformation (25) bestimmt wird, wobei die zweite Dienstgüteinformation (32) insbesondere vom Telekommunikationsnetz (100) bestimmt wird.

4. Verfahren nach einem der vorhergehenden Ansprüche, **dadurch gekennzeichnet, dass** die zweite Dienstqualität einer höheren oder besseren Dienstqualität entspricht als die erste Dienstqualität.

5. Verfahren nach einem der vorhergehenden Ansprüche, **dadurch gekennzeichnet, dass** die die Dienstqualität und/oder die Kundenzufriedenheit betreffende Kundenzufriedenheitsinformation (25) auf eine zu geringe Dienstqualität und/oder eine zu geringe Kundenzufriedenheit hinweist.

6. Verfahren nach einem der vorhergehenden Ansprüche, **dadurch gekennzeichnet, dass** die Kundenzufriedenheitsinformation (25) gemäß wenigstens einer der nachfolgenden Alternativen übertragen wird:
-- mittels einer spezifisch zur Übertragung der Kundenzufriedenheitsinformation (25) am Telekommunikationsendgerät (20) vorhandenen Anwendung (21),
-- mittels Kontaktierung einer dem Telekommunikationsnetz zugeordneten Kundendienststelle durch eine am Telekommunikationsendgerät vorhandene weitere Anwendung (22) zur Übertragung von Sprach- oder Datensignalen.

7. Verfahren nach einem der vorhergehenden Ansprüche, **dadurch gekennzeichnet, dass** zusätzlich zu der Kundenzufriedenheitsinformation (25) eine oder eine Mehrzahl der folgenden Informationen übertragen wird:
-- wenigstens eine Standortinformation des Telekommunikationsendgeräts (20);
-- eine Zeitangabe, auf die sich die Kundenzufriedenheitsinformation (25) bezieht;
-- wenigstens ein technischer Leistungsindikator (KPI-Wert, Key Performance Indicator);
-- eine anwendungsbezogene Rückmeldung.

8. Verfahren nach einem der vorhergehenden Ansprüche, **dadurch gekennzeichnet, dass** das die Kundenzufriedenheitsinformation (25) indizierende Dienstnutzungsmuster einem Dienstnutzungsmuster gemäß wenigstens einer der nachfolgenden Situationen entspricht:
-- am Telekommunikationsendgerät (20) wird wiederholt ein identischer Seitenaufbau oder eine identische Datenübertragung angefordert;
-- am Telekommunikationsendgerät (20) wird eine Anwendung abgebrochen, bevor eine Nutzsituation der Anwendung eintritt;
-- am Telekommunikationsendgerät (20) wird eine Anwendung installiert und innerhalb eines vorgegebenen zeitlichen Löschintervalls nach der Installation der Anwendung oder nach einer Benutzung der Anwendung wieder gelöscht.

9. Verfahren nach einem der vorhergehenden Ansprüche, **dadurch gekennzeichnet, dass** in einem vierten Verfahrensschritt zeitlich nach dem dritten Verfahrensschritt vom Telekommunikationsendgerät (20) eine vom Telekommunikationsnetz (100) gesendete und einer dritten Dienstqualität entsprechende dritte Dienstgüteinformation (33) empfangen wird, wobei die dritte Dienstqualität einer gegenüber der zweiten Dienstqualität geänderten Dienstqualität entspricht, wobei insbesondere die dritte Dienstqualität der ersten Dienstqualität entspricht.

10. Verfahren nach einem der vorhergehenden Ansprüche, **dadurch gekennzeichnet, dass** der Zeitraum der Anwendung der zweiten Dienstqualität einem vorgegebenen Zeitintervall (26) entspricht.

11. Verfahren nach einem der vorhergehenden Ansprüche, **dadurch gekennzeichnet, dass** die Änderung von der ersten Dienstqualität zur zweiten Dienstqualität im dritten Verfahrensschritt und/oder die Änderung von der zweiten Dienstqualität zur dritten Dienstqualität im vierten Verfahrensschritt am Telekommunikationsendgerät (20) signalisiert wird.

12. Verfahren nach einem der vorhergehenden Ansprüche, **dadurch gekennzeichnet, dass** in einem fünften Verfahrensschritt zeitlich nach dem zweiten Verfahrensschritt und zeitlich vor dem dritten Verfahrensschritt ein Kundenzufriedenheitsindex in Abhängigkeit einer Mehrzahl von Kundenzufriedenheitsinformationen generiert wird, wobei der dritte Verfahrensschritt in Abhängigkeit des Kundenzufriedenheitsindices durchgeführt wird.

13. System, umfassend ein Telekommunikationsendgerät (20) und ein Telekommunikationsnetz (100), zur Veränderung der dem Telekommunikationsendgerät (20) zugeordneten Dienstqualität für die Verwendung des Telekommunikationsendgeräts (20) mit dem Telekommunikationsnetz (100), wobei das System derart konfiguriert ist, dass während der Verwendung des Telekommunikationsendgeräts (20) mit dem Telekommunikationsnetz (100) vom Telekommunikationsendgerät (20) eine vom Telekommunikationsnetz (100) gesendete und einer ersten Dienstqualität entsprechende erste Dienstgüteinformation (31) empfangen wird und die erste Dienstqualität angewendet wird,
wobei das System ferner derart konfiguriert ist, dass
-- entweder eine die Dienstqualität und/oder die Kundenzufriedenheit betreffende Kundenzufriedenheitsinformation (25) vom Telekommunikationsendgerät (20) zum Telekommunikationsnetz (100) übertragen wird oder
-- eine die Dienstqualität und/oder die Kundenzufriedenheit betreffende Kundenzufriedenheitsinformation (25) im Telekommunikationsnetz (100) aufgrund einer Benutzung des Telekommunikationsendgeräts (20) gemäß eines die Kundenzufriedenheit indizierenden Dienstnutzungsmusters während der Anwendung der ersten Dienstqualität generiert wird,
wobei das System ferner derart konfiguriert ist, dass vom Telekommunikationsendgerät (20) eine vom Telekommunikationsnetz (100) gesendete und einer zweiten Dienstqualität entsprechende zweite Dienstgüteinformation (32) empfangen wird und die zweite Dienstqualität angewendet wird, wobei die zweite Dienstqualität einer gegenüber der ersten Dienstqualität geänderten Dienstqualität entspricht, wobei die Veränderung der Dienstqualität in Abhängigkeit von der Kundenzufriedenheitsinformation erfolgt.

14. Computerprogramm mit Programmcodemitteln zur Durchführung aller Schritte eines Verfahrens nach einem der Ansprüche 1 bis 12, wenn das Computerprogramm auf einer Netzeinheit eines Telekommunikationsnetzes (100), einem Computer oder einer entsprechenden Recheneinheit ausgeführt wird.

15. Computerprogrammprodukt mit einem computerlesbaren Medium und einem auf dem computerlesbaren Medium gespeicherten Computerprogramm nach Anspruch 14.

## Claims

1. Method for modifying the service quality associated with a telecommunication terminal (20) for use of the telecommunication terminal (20) with a telecommunication network (100), wherein the method comprises the following method steps:
- in a first method step during use of the telecommunication terminal (20) with the telecommunication network (100), a first item of service grade information (31) emitted by the telecommunication network (100) and corresponding to a first service quality is received by the telecommunication terminal (20) and the first service quality is applied,
- in a second method step chronologically subsequent to the first method step,
- an item of customer satisfaction information (25) relating to the service quality and/or the customer satisfaction is transmitted from the telecommunication terminal (20) to the telecommunication network (100) or
- an item of customer satisfaction information (25) relating to the service quality and/or the customer satisfaction is generated in the telecommunication network (100) during the first method step on the basis of use of the telecommunication terminal (20) according to a service use pattern indicating the customer satisfaction,
- in a third method step chronologically subsequent to the second method step, a second item of service grade information (32) emitted by the telecommunication network (100) and corresponding to a second service quality is received by the telecommunication terminal (20) and the second service quality is applied, wherein the second service quality corresponds to a service quality modified with respect to the first service quality, wherein the modification of the service quality is carried out in dependence on the customer satisfaction information.

2. Method as claimed in claim 1, **characterised in that** the customer satisfaction information (25)
- is generated by the telecommunication terminal (20) or
- is generated by the telecommunication network (100), wherein the customer satisfaction information (25) is calculated in particular in dependence on the detected service quality measurement values, wherein the service quality measurement values are ascertained in particular by measuring a signal-to-noise ratio and/or a service grade.

3. Method as claimed in any one of the preceding claims, **characterised in that** the second service grade information (32) is determined in dependence on the customer satisfaction information (25), wherein the second item of service grade information (32) is determined in particular by the telecommunication network (100).

4. Method as claimed in any one of the preceding claims, **characterised in that** the second service quality corresponds to a higher or better service quality than the first service quality.

5. Method as claimed in any one of the preceding claims, **characterised in that** the customer satisfaction information (25) relating to the service quality and/or the customer satisfaction indicates service quality which is too low and/or customer satisfaction which is too low.

6. Method as claimed in any one of the preceding claims, **characterised in that** the customer satisfaction information (25) is transmitted according to at least one of the following alternatives:
- by means of an application (21) provided specifically for transmission of the customer satisfaction information (25) at the telecommunication terminal (20),
- by means of contacting a customer service point associated with the telecommunication network by means of a further application (22), provided at the telecommunication terminal, for transmission of voice or data signals.

7. Method as claimed in any one of the preceding claims, **characterised in that** in addition to the customer satisfaction information (25) one or a plurality of the following items of information is transmitted:
- at least one item of location information of the telecommunication terminal (20);
- a time specification to which the customer satisfaction information (25) relates;
- at least one technical performance indicator (KPI value, Key Performance Indicator);
- an application-related item of feedback.

8. Method as claimed in any one of the preceding claims, **characterised in that** the service use pattern indicating the customer satisfaction information (25) corresponds to a service use pattern according to at least one of the following situations:
- at the telecommunication terminal (20), an identical page structure or an identical data transmission is repeatedly requested;
- at the telecommunication terminal (20) an application is interrupted before a usage situation of the application occurs;
- at the telecommunication terminal (20) an application is installed and is deleted within a preset time-related deletion interval after installation of the application or after use of the application.

9. Method as claimed in any one of the preceding claims, **characterised in that** in a fourth method step chronologically subsequent to the third method step, a third item of service grade information (33) emitted by the telecommunication network (100) and corresponding to a third service quality is received by the telecommunication terminal (20), wherein the third service quality corresponds to a service quality modified with respect to the second service quality, wherein in particular the third service quality corresponds to the first service quality.

10. Method as claimed in any one of the preceding claims, **characterised in that** the period of the application of the second service quality corresponds to a preset time interval (26).

11. Method as claimed in any one of the preceding claims, **characterised in that** the modification from the first service quality to the second service quality in the third method step and/or the modification from the second service quality to the third service quality in the fourth method step is signalled at the telecommunication terminal (20).

12. Method as claimed in any one of the preceding claims, **characterised in that** in a fifth method step chronologically subsequent to the second method step and chronologically prior to the third method step, a customer satisfaction index is generated in dependence on a plurality of items of customer satisfaction information, wherein the third method step is carried out in dependence on the customer satisfaction index.

13. System, comprising a telecommunication terminal (20) and a telecommunication network (100), for modifying the service quality associated with the telecommunication terminal (20) for use of the telecommunication terminal (20) with the telecommunication network (100), wherein the system is configured in such a way that during use of the telecommunication terminal (20) with the telecommunication network (100), a first item of service grade information (31) emitted by the telecommunication network (100) and corresponding to a first service quality is received by the telecommunication terminal (20) and the first service quality is applied, wherein the system is further configured in such a way that
- either an item of customer satisfaction information (25) relating to the service quality and/or the customer satisfaction is transmitted from the telecommunication terminal (20) to the telecommunication network (100) or
- an item of customer satisfaction information (25) relating to the service quality and/or the customer satisfaction is generated in the telecommunication network (100), during the application of the first service quality, on the basis of use of the telecommunication terminal (20) according to a service use pattern indicating the customer satisfaction,
wherein the system is further configured in such a way that a second item of service grade information (32) emitted by the telecommunication network (100) and corresponding to a second service quality is received by the telecommunication terminal (20) and the second service quality is applied, wherein the second service quality corresponds to a service quality modified with respect to the first service quality, wherein the modification of the service quality is carried out in dependence on the customer satisfaction information.

14. Computer program having program code means for carrying out all the steps of a method according to any one of claims 1 to 12 when the computer program is executed on a network unit of a telecommunication network (100), a computer or a corresponding computing unit.

15. Computer program product having a computer-readable medium and a computer program as claimed in claim 14, stored on the computer-readable medium.

## Revendications

1. Procédé de modification de la qualité de service associée à un terminal de télécommunication (20) pour l'utilisation du terminal de télécommunication (20) avec un réseau de télécommunication (100), le procédé présentant les étapes de procédé suivantes :
- dans une première étape de procédé pendant l'utilisation du terminal de télécommunication (20) avec le réseau de télécommunication (100), une première information de qualité de service (31) émise par le réseau de télécommunication (100) et correspondant à une première qualité de service est reçue par le terminal de télécommunication (20), et la première qualité de service est appliquée,
- dans une deuxième étape de procédé temporellement après la première étape de procédé,
- une information de satisfaction de client (25) concernant la qualité de service et/ou la satisfaction de client est transmise par le terminal de télécommunication (20) au réseau de télécommunication (100) ou
- une information de satisfaction de client (25) concernant la qualité de service et/ou la satisfaction de client est générée en raison d'une utilisation du terminal de télécommunication (20) selon un modèle d'utilisation de service indexant la satisfaction de client pendant la première étape de procédé,
- dans une troisième étape de procédé temporellement après la deuxième étape de procédé, une deuxième information de qualité de service (32) émise par le réseau de télécommunication (100) et correspondant à une deuxième qualité de service est reçue par le terminal de télécommunication (20), et la deuxième qualité de service est appliquée, la deuxième qualité de service correspondant à une qualité de service modifiée par rapport à la première qualité de service, la modification de la qualité de service étant réalisée en fonction de l'information de satisfaction de client.

2. Procédé selon la revendication 1, **caractérisé en ce que** l'information de satisfaction de client (25)
- est générée par le terminal de communication (20) ou
- est générée par le réseau de télécommunication (100), l'information de satisfaction de client (25) étant calculée notamment en fonction de valeurs de mesure de qualité de service détectées, les valeurs de mesure de qualité de service étant déterminées notamment par mesure d'un rapport signal/bruit et/ou par une qualité de service.

3. Procédé selon l'une quelconque des revendications précédentes, **caractérisé en ce que** la deuxième information de qualité de service (32) est déterminée en fonction de l'information de satisfaction de client (25), la deuxième information de qualité de service (32) étant notamment déterminée par le réseau de télécommunication (100).

4. Procédé selon l'une quelconque des revendications précédentes, **caractérisé en ce que** la deuxième qualité de service correspond à une qualité de service supérieure ou meilleure que la première qualité de service.

5. Procédé selon l'une quelconque des revendications précédentes, **caractérisé en ce que** l'information de satisfaction de client (25) concernant la qualité de service et/ou la satisfaction de client indique une qualité de service trop basse et/ou une satisfaction de client trop basse.

6. Procédé selon l'une quelconque des revendications précédentes, **caractérisé en ce que** l'information de satisfaction de client (25) est transmise selon au moins une des alternatives suivantes :
- au moyen d'une application (21) présent sur le terminal de télécommunication (20) spécifiquement pour la transmission de l'information de satisfaction de client (25),
- par mise en contact d'un poste de service clientèle associé au réseau de télécommunication au moyen d'une application (22) supplémentaire présente sur le terminal de télécommunication, destinée à la transmission de signaux vocaux ou de signaux de données.

7. Procédé selon l'une quelconque des revendications précédentes, **caractérisé en ce qu'**en plus de l'information de satisfaction de client (25), une ou une pluralité des informations suivantes est transmise :
- au moins une information de localisation du terminal de télécommunication (20) ;
- une indication de temps à laquelle l'information de satisfaction de client (25) fait référence ;
- au moins un indicateur de performance technique (valeur KPI, Key Performance Indicator) ;
- une information en retour, relative à l'application.

8. Procédé selon l'une quelconque des revendications précédentes, **caractérisé en ce que** le modèle d'utilisation de service indexant l'information de satisfaction de client (25) correspond à un modèle d'utilisation de service selon au moins l'une des situations suivantes :
- une structure de page identique ou une transmission de données identique est demandée de manière répétée sur le terminal de télécommunication (20) ;
- une application est interrompue sur le terminal de télécommunication (20) avant qu'une situation d'utilisation de l'application n'apparaisse ;
- une application est installée sur le terminal de télécommunication (20) et, dans un intervalle temporel de suppression prédéfini après l'installation de l'application ou après une utilisation de l'application, est de nouveau supprimée.

9. Procédé selon l'une quelconque des revendications précédentes, **caractérisé en ce que** dans une quatrième étape de procédé temporellement après la troisième étape de procédé, une troisième information de qualité de service (33) émise par le réseau de télécommunication (100) et correspondant à une troisième qualité de service est reçue par le terminal de télécommunication (20), la troisième qualité de service correspondant à une qualité de service modifiée par rapport à la deuxième qualité de service, notamment la troisième qualité de service correspondant à la première qualité de service.

10. Procédé selon l'une quelconque des revendications précédentes, **caractérisé en ce que** la période d'application de la deuxième qualité de service correspond à un intervalle de temps (26) prédéfini.

11. Procédé selon l'une quelconque des revendications précédentes, **caractérisé en ce que** la modification de la première qualité de service vers la deuxième qualité de service à la troisième étape de procédé et/ou la modification de la deuxième qualité de service vers la troisième qualité de service à la quatrième étape de procédé sont signalées sur le terminal de télécommunication (20).

12. Procédé selon l'une quelconque des revendications précédentes, **caractérisé en ce que** dans une cinquième étape de procédé temporellement après la deuxième étape de procédé et temporellement avant la troisième étape de procédé, un index de satisfaction de client est généré en fonction d'une pluralité d'informations de satisfaction de client, la troisième étape de procédé étant réalisée en fonction de l'indice de satisfaction de client.

13. Système comprenant un terminal de télécommunication (20) et un réseau de télécommunication (100) destiné à modifier la qualité de service associée au terminal de télécommunication (20) pour l'utilisation du terminal de télécommunication (20) avec le réseau de télécommunication (100), le système étant configuré de manière à ce que pendant l'utilisation du terminal de télécommunication (20) avec le réseau de télécommunication (100), une première information de qualité de service (31) émise par le réseau de télécommunication (100) et correspondant à une première qualité de service soit reçue par le terminal de télécommunication (20) et que la première qualité de service soit appliquée,
le système étant en outre configuré de manière à ce que
- soit une information de satisfaction de client (25) concernant la qualité de service et/ou la satisfaction de client soit transmise par le terminal de télécommunication (20) au réseau de télécommunication (100)
- soit une information de satisfaction de client (25) concernant une qualité de service et/ou la satisfaction de client soit générée dans le réseau de télécommunication (100) en raison d'une utilisation du terminal de télécommunication (20) selon un modèle d'utilisation de service indexant la satisfaction de client pendant l'application de la première qualité de service,
le système étant en outre configuré de manière à ce qu'une deuxième information de qualité de service (32) émise par le réseau de télécommunication (100) et correspondant à une deuxième qualité de service soit reçue par le terminal de télécommunication (20) et que la deuxième qualité de service soit appliquée, la deuxième qualité de service correspondant à une qualité de service modifiée par rapport à la première qualité de service, la modification de la qualité de service étant réalisée en fonction de l'information de satisfaction de client.

14. Programme informatique comprenant des moyens de codage de programme pour la réalisation de toutes les étapes selon l'une quelconque des revendications 1 à 12, lorsque le programme informatique est exécuté sur une unité de réseau d'un réseau de télécommunication (10)), sur un ordinateur ou une unité de calcul correspondante.

15. Produit de programme informatique comprenant un support lisible par ordinateur et un programme informatique mémorisé sur le support lisible par ordinateur selon la revendication 14.
